# EUROPEAN PATENT SPECIFICATION

(11) **EP 1 630 373 B1**
(45) Date of publication and mention of the grant of the patent: **15.08.2007**
(21) Application number: 05018162.7
(22) Date of filing: 22.08.2005
(51) Int. Cl.: F01N 9/00, F01N 3/023, F02D 41/02

(54) **Exhaust gas purifying apparatus**
Abgasreinigungsvorrichtung
Dispositif de purification de gaz d'échappement

(30) Priority: 24.08.2004 JP 2004243488
(43) Date of publication of application: 01.03.2006
(73) Proprietor: MITSUBISHI JIDOSHA KOGYO KABUSHIKI KAISHA, Tokyo 108-8410 (JP)
(72) Inventor: Shigahara, Kei, c/o Mitsubishi Jidosha Kogyo K.K., Minato-ku Tokyo 108-8410 (JP); Iizuka, Akira, c/o Mitsubishi Jidosha Kogyo K.K., Minato-ku Tokyo 108-8410 (JP); Taniguchi, Hiroki, c/o Mitsubishi Jidosha Kogyo K.K., Minato-ku Tokyo 108-8410 (JP)
(74) Representative: Vossius & Partner

(56) References cited:
- EP-A- 1 431 531
- US-A1- 2002 078 684
- PATENT ABSTRACTS OF JAPAN vol. 2003, no. 12, 5 December 2003 (2003-12-05) -& JP 2003 239724 A (NISSAN MOTOR CO LTD), 27 August 2003 (2003-08-27)

## Description

The present invention relates to an exhaust gas purifying apparatus for an engine.

The art has conventionally developed a particulate filter (hereinafter simply called a "DPF" or a "filter") that traps diesel particulate matter (hereinafter simply called "particulates" or "PM") contained in exhaust gas emitted from a diesel engine and has placed the filter in the exhaust system of the diesel engine in order to purify the exhaust gas.

An amount of particulate matter trapped by the filter gradually increases and clogs the filter sooner or later. For this reason, so-called regeneration is forcibly carried out as required so that particulates trapped by the filter burn out as required.

An example of a technique concerning regeneration of a filter is disclosed in JP-A-2003-239724. This publication carries out regeneration by various methods (e.g., a retard of a main injection of the engine or execution of a post injection) each of which raises the temperature of the exhaust gas to let particulates burn out.

Additionally, the patent publication mentions that it is possible to prevent a temperature of the filter from drastically increasing by continuing fuel supply to the engine for a predetermined time even if the driver halts the engine during a regeneration event.

By the way, besides deliberate stop of the engine by the driver, the state of running out of gas in which no fuel remains in the fuel tank is assumed to be a cause of a halt of engine while the filter is being regenerated. However, it is impossible to use the technique disclosed in the above reference since no fuel remains in the fuel tank in the state of running out of gas, further the engine cannot run and sudden increase in filter temperature is unavoidable.

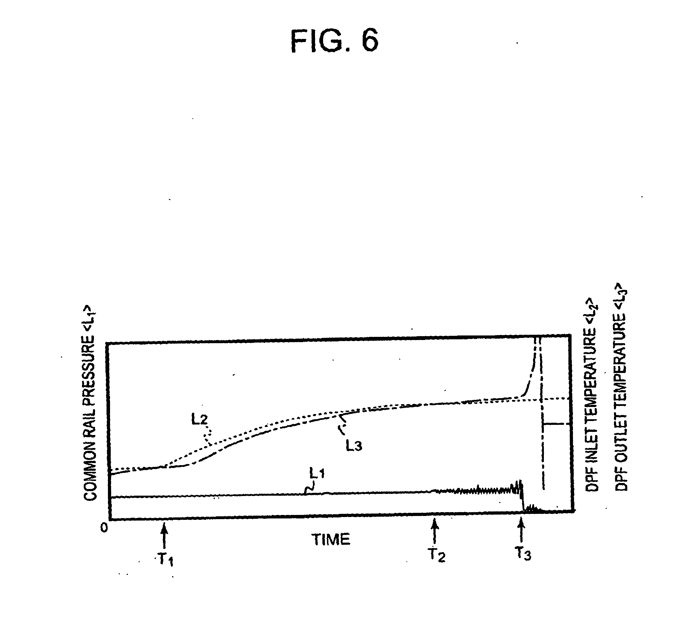

Here, description will now be made in relation to a variation in a filter temperature when the vehicle comes to run out of gas while the exhaust gas filter is being regenerated with reference to FIG. 6, in which a solid line L₁ represents a pressure of the common rail in the engine; a chain line L₂ represents a temperature of exhaust gas at the inlet of the filter which temperature is measured by a temperature sensor disposed at the enter of the filter; and a one-dot chain line L₃ represents temperature of the exhaust gas at the outlet of the filter which temperature is measured by a temperature sensor disposed at the exit of the filter. Further, the abscissa represents time.

In FIG. 6, a regeneration process is initiated at the time T₁ whereupon temperatures of the exhaust gas measured at the inlet and the outlet of the filter increase. However, in accordance with reducing of the fuel remaining in the fuel tank, the common rail pressure comes to be unstable (see the time T₂). Subsequently, the fuel tank becomes completely empty at the time point T3 and the common rail pressure becomes substantially zero to halt fuel injection in the engine.

Focusing on the temperatures of the exhaust gas at the inlet and the outlet of the filter, the temperature at the inlet does not vary between before and after the vehicle running out of gas, but the temperature at the outlet drastically increases after the vehicle running out of gas. That indicates occurrence of abnormal combustion in the filter. The following two points are main probable causes for abnormal combustion occurring if the engine stops during regenerating the filter.
(1) the engine stop provides filter with oxygen corresponding to that contained in the atmosphere; and
(2) the engine stop sharply reduces an amount of exhaust gas flowing in the filter and the gas flow does not take the heat in the filter away any longer.

US-A-2002-0078684 discloses a method of regeneration of diesel engine particulate filter in which a filter is regenerated by increasing the exhaust temperature to achieve burn off of the accumulated particulates and the regeneration of the filter is inhibited when the sensed level of fuel in a diesel fuel tank for the engine falls below a threshold level.

With the foregoing problems in view, the object of the present invention is to provide an exhaust gas purification apparatus for an engine that is able to avoid abnormal combustion caused by running out of gas during a filter regeneration process.
This object can be achieved by the features defined in the claims.

Other objects and further features of the present invention will be apparent from the following detailed description when read in conjunction with the accompanying drawings, in which;
FIG. 1 is a block diagram schematically showing the entire configuration of an exhaust gas purifying apparatus for an engine according to a first embodiment of the present invention;
FIG. 2 is a flow diagram showing a succession of procedural steps for purifying exhaust gas carried out by the exhaust gas purifying apparatus of FIG. 1;
FIG. 3 is a block diagram schematically showing the entire configuration of an exhaust gas purifying apparatus for an engine according to a second embodiment of the present invention;
FIGS. 4 and 5 are flow diagrams showing a succession of procedural steps for purifying exhaust gas carried out by the exhaust gas purifying apparatus of FIG. 3; and
FIG. 6 is a graph showing abnormal combustion occuring at a diesel particulate filter caused by running out of gas.

Various preferred embodiments of the present invention will now be described with reference to the accompanying drawings.

### (Reference example)

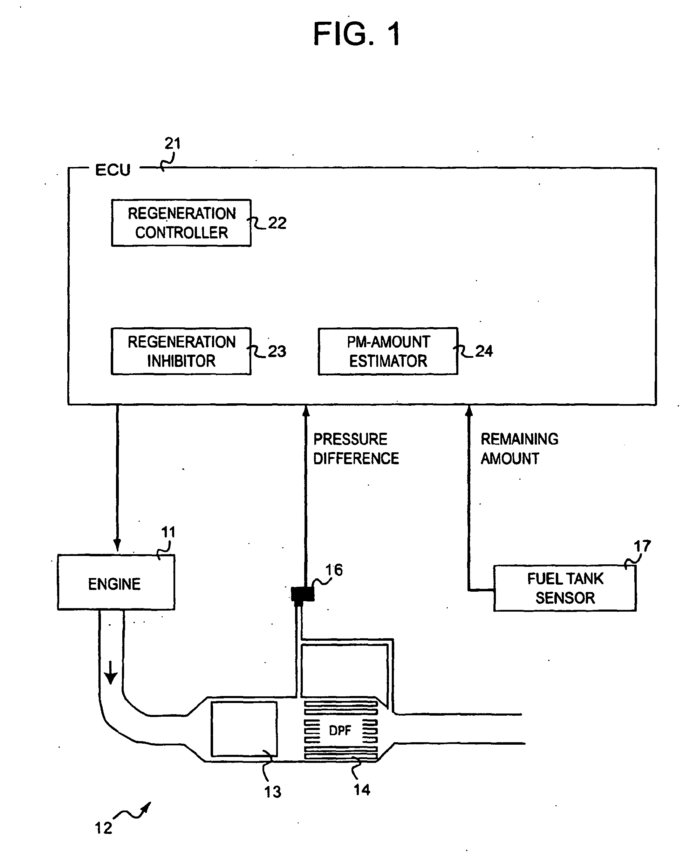

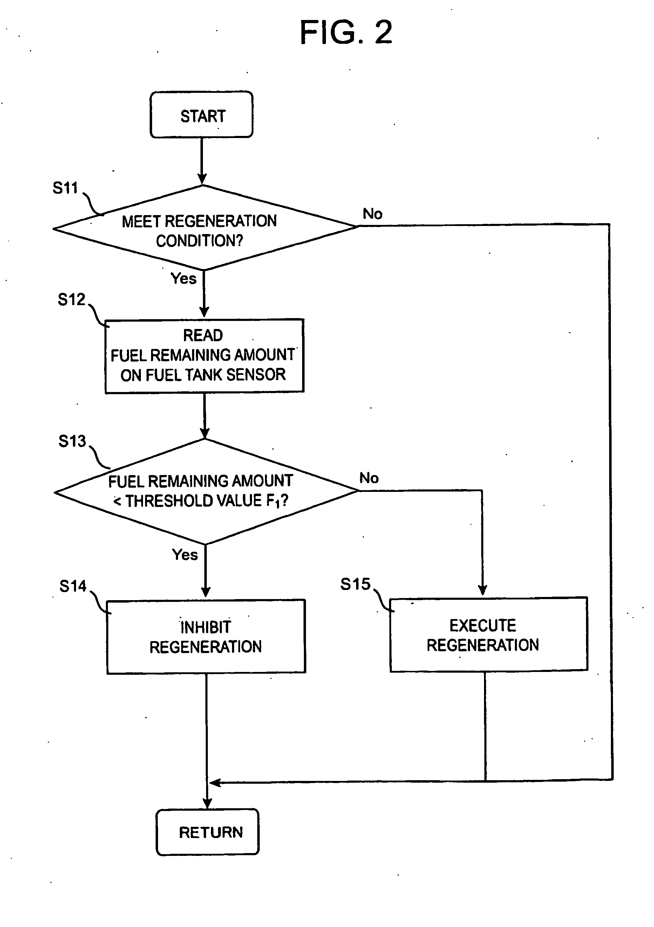

Concerning an exhaust gas purifying apparatus according to a reference example. FIG. 1 schematically shows the entire configuration of the present invention and FIG. 2 is a flow diagram showing a succession of procedural steps performed by the apparatus of FIG. 1.

As shown in FIG. 1, an exhaust system 12 of a diesel engine (hereinafter simply called "engine") 11 includes an oxidation catalyst 13 and a DPF (Diesel Particulate Filter) 14 downstream of the oxidation catalyst 13.

The DPF 14 takes the form of a ceramic filter for trapping PM (particulate matter) contained in exhaust gas. Regeneration that raises the temperature of exhaust gas forcibly burns PM trapped by the DPF 14, as will be detailed described later. The regeneration thereby avoids clogging of the DPF 14 with PM and also a decline in capability of the DPF 14 for purification exhaust gas.

In the exhaust system 12, there is provided with a differential pressure sensor 16 which measures a difference between a pressure upstream of the DPF 14 and that of downstream of the DPF 14. Measurement results obtained by the differential pressure sensor 16 are represented by pressure difference signals and are sent to an ECU (Electronic Control Unit) 21 that is to be detailed described later.

The engine 11 includes the ECU 21, which is connected to the differential pressure sensor 16 and a fuel tank sensor 17 for measuring an amount of fuel remaining in the fuel tank (not shown). To the ECU 21, a CPU, a memory, an interface and other functional units, which however do not appear in the drawing, are connected. Further, the ECU 21 includes software serving as a regeneration controller (regenerating means) 22, a regeneration inhibitor (managing means) 23, and a PM-amount estimator (PM-amount estimating means) 24.

The regeneration controller 22 controls fuel injection in an injector (not shown) of the engine 11 which control is realized by a main injection retard or a post injection, if a predetermined regenerating condition is met, so that surplus fuel is supplied to and reacts with the oxidation catalyst 13 to increase the temperature of exhaust gas to be flowed into the DPF 14. Judgment as to whether or not the condition for regenerating the DPF 14 is satisfied depends on PM larger than a predetermined amount which is estimated by the PM-amount estimator 24, which is to be detailed described later.

The regeneration inhibitor 23 inhibits an operation performed by the regeneration controller 22 when an amount of remaining fuel that is measured by the fuel tank sensor 17 is smaller than a predetermined amount (a predetermined value) F1. If the regeneration inhibitor 23 inhibits an operation of the regeneration controller 22, a regeneration of the DPF 14 by means of fuel injection control, such as a main injection retard or a post injection, is inhibited.

The PM-amount estimator 24 estimates an amount of PM trapped by the DPF 14 on the basis of a pressure difference between the pressure upstream of the DPF 14 and that downstream of the DPF 14 which difference is measured by the differential pressure sensor 16 and of a flow amount of exhaust gas estimated from the running state of the engine 11. Such a PM estimated amount is in the form of a map value previously retained in the memory (not-shown) of the ECU 21.

The exhaust gas purification apparatus of the reference example has the configuration above explained and obtains the following advantages.

First of all, the regeneration controller 22 judges whether or not the regeneration condition is satisfied, i.e. , whether or not the PM-amount estimator 24 estimates that an amount of the PM trapped by the DPF 14 is equal to or lager than the predetermined amount in step S11. If the trapped PM is judged to be equal to more than the predetermined amount, the regeneration condition is fulfilled and the succession of procedural steps proceeds to step S12.

After that, the regeneration inhibitor 23 reads the amount of remaining fuel measured by the fuel tank sensor 17. If the read amount is judged to be equal to or more than the predetermined amount F1 ("No" route) in step S13, the regeneration controller 22 carries out amain injection retard or a post injection as usual to regenerate the DPF 14. As a result, the temperature of exhaust gas to be flowed into the DPF 14 increases and burns the PM trapped by the DPF 14.

On the other hand, if the read amount is less than the predetermined amount (the predetermined value) F1, the regeneration inhibitor 23 inhibits the operation of the regeneration controller 22, before the vehicle actually runs out gas, so as not to occur fuel injection control, such as a main injection retard or a post injection, which regenerates the DPF 14 (in steps S13-S14).

As described above, in the exhaust gas purification apparatus for an engine of the reference example, an amount remaining fuel measured by the fuel tank sensor 17 being less than the predetermined amount F1 prevents the regeneration controller 22 from fuel injection control that results in regeneration of the DPF 14. The prevention avoids a halt of the engine 11 during regenerating the DPF 14 due to running out of gas and a resultant abnormal combustion can be avoided.

Regeneration consumes more fuel than normal driving, and may drastically reduce a runnable distance the remaining fuel allows the vehicle to run. In the first embodiment, if the fuel tank sensor 17 measures the remaining fuel amount less than the predetermined amount F1, the regeneration inhibitor 23 inhibits the regeneration controller 22 from regenerating the DPF 14 using fuel injection control, so that it is possible to avoid the problem that the runnable distance drastically reduces.

### (Embodiment of the invention)

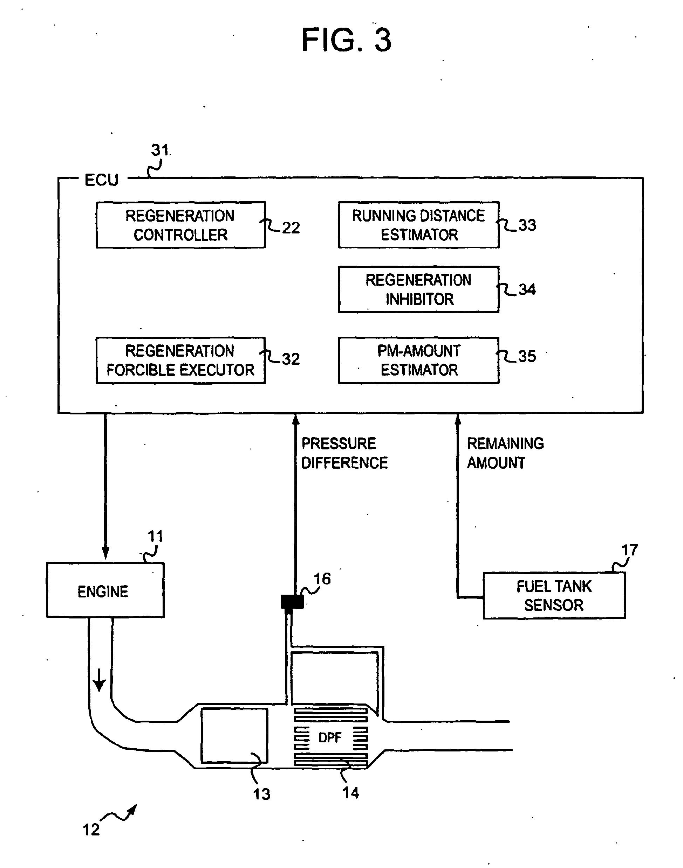

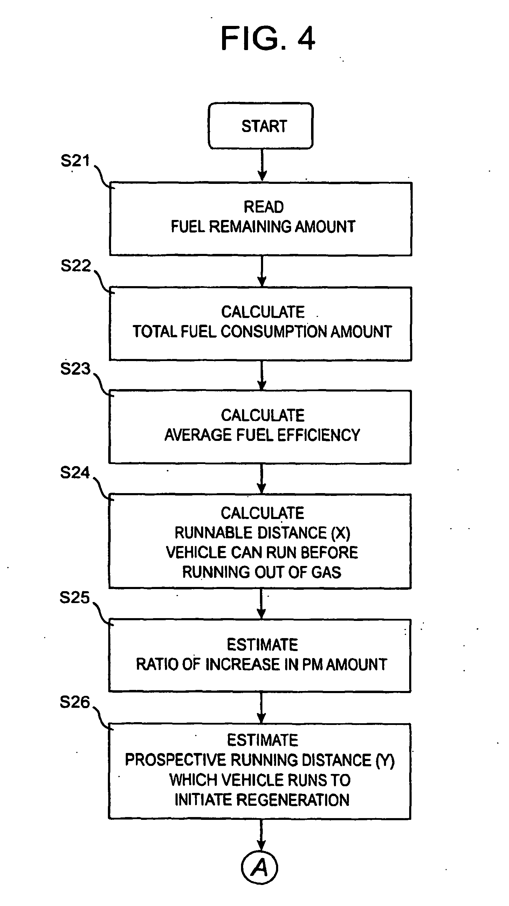

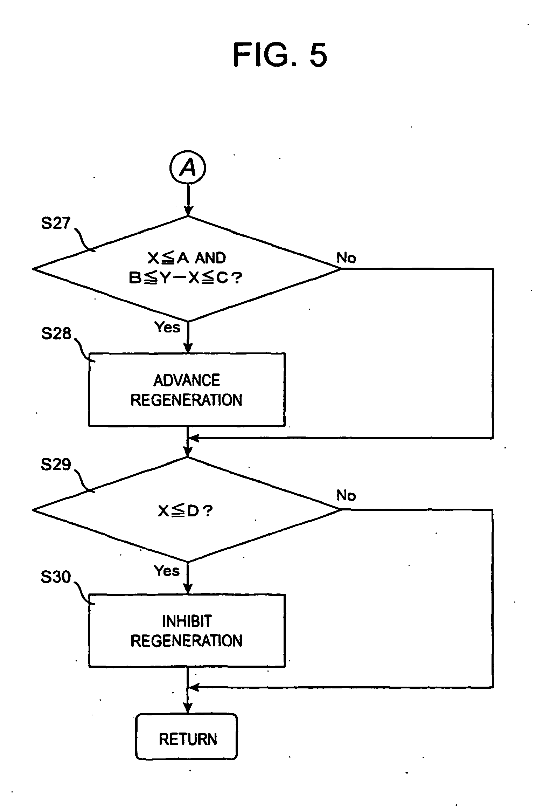

Subsequently, description will be made in relation to an exhaust gas purification apparatus for an engine according to an embodiment of the invention with reference to FIGS. 3-5. FIG. 3 shows the entire configuration of the apparatus, and FIGS. 4 and 5 show a succession of procedural steps performed by the apparatus of FIG. 3.

Like reference numbers designate similar parts or elements throughout several views of different illustrated examples, so any repetitious description is omitted here. Description here focuses on differences from the reference example and the drawings used to explain the reference example are also used in the embodiment of the invention.

As shown in FIG. 3, the ECU 31 of the embodiment of the invention is partially different from the ECU 21 of the reference example More specifically, the ECU 31 includes a regeneration controller 22 similarly to the reference example, and further includes a regeneration forcible executor (managing means) 32, a running distance estimator (running distance estimating means) 33, a regeneration inhibitor (managing means) 34 and a PM-amount estimator 35 differently from the reference example.

The PM-amount estimator 35 has a function identical to that of the PM-amount estimator 24 of the reference example and an additional function for estimating percentage increases in PM amount trapped by the DPF 14 on the basis of variation in pressure difference between upstream and downstream the oxidation catalyst 13 measured by the differential pressure sensor 16 which pressure difference varies while the vehicle runs a predetermined distance. Such percentage increases based on a pressure variation are previously stored in the memory (not shown) of the ECU 31.

The running distance estimator 33 calculates a regeneration distance (i.e., a regeneration period) Y, which the vehicle runs in order to start the regeneration of the DPF 14, on the basis of the percentage increases in PM amount trapped by the DPF 14 estimated by the PM-amount estimator 35 and the limit PM amount trapped by the DPF 14.

The running distance estimator 33 calculates the total amount of consumed fuel injected by an injector (not shown) and consumed after the fuel tank sensor 17 detects a full-tank condition, which total amount is used for calculating an average of the fuel efficiency (average fuel efficiency). Finally, the running distance estimator 33 calculates a runnable distance X, which the remaining fuel is estimated to allow the vehicle to run, on the basis of the average fuel efficiency and the actual amount of fuel remaining.

The forcible executor 32 causes the regeneration controller 22 to carry out fuel injection control in order to forcibly execute regeneration of the DPF 14, which may not however trap PM less in quantity than the predetermined amount if the runnable distance X that the fuel remaining in the fuel tank allows the vehicle to run is equal to or shorter than a predetermined distance A and the difference between the runnable distance X and the regeneration distance Y calculated by the running distance estimator 33 is equal to or shorter than a predetermined distance C and is equal to or longer than a predetermined B (i.e., X≦A and B≦X-Y≦ C; a special condition) even though the vehicle does not run the regeneration distance Y yet. In other words, regeneration of the DPF 14 is advanced if the special condition is satisfied.

One condition X≦A is set in terms of advancing of the regeneration being not required when a sufficient amount of fuel remains and a runnable distance X is therefore long. The other condition B≦X-Y≦C is set in terms of advancing of the regeneration being preferable when the runnable distance X that the remaining fuel allows the vehicle to run is close to the regeneration distance Y that the vehicle runs to regenerate the DPF 14 because the vehicle runs out gas while the regeneration is being carried out at the time when the vehicle runs the regeneration distance Y. The three predetermined distances have a relationship of A>C≧B.

The regeneration inhibitor 34 inhibits the operation of the regeneration controller 22 so as not to perform fuel injection control, such as a main injection retard or a post injection, that regenerates the DPF 14 if the runnable distance X is equal to or shorter than a predetermined distance D (i.e., X≦D). The condition X≦D is set in terms of regeneration being not ought to be executed when the remaining fuel that is small in amount may cause the vehicle to run out of gas shortly.

The exhaust gas purification apparatus for an engine according to the embodiment of invention has the above configuration and obtains the following advantages.

First of all, the running distance estimator 33 calculates the total amount of consumed fuel injected by an injector (not shown) of the engine 11 and consumed after the fuel tank sensor 17 detects a full-tank condition to obtain the total fuel consumption amount (steps S21, S22). The running distance estimator 33 further calculates an average of the fuel efficiency (average fuel efficiency), and on the basis of the average fuel efficiency and the actual amount of fuel remaining in the fuel tank, finally calculates the distance (runnable distance) X that the remaining fuel is estimated to allow the vehicle to run (step S24).

In step S25, the PM-amount estimator 35 estimates percentage increases in PM amount trapped by the DPF 14 on the basis of the variation in PM amount trapped by the DPF 14 while the vehicle runs a predetermined distance.

In the next step S26, the running distance estimator 33 calculates a regeneration distance Y (i.e., regeneration period) that the vehicle runs until the forthcoming regeneration takes place on the basis of the percentage increases in PM amount trapped by the DPF 14, which amount is estimated by the PM-amount estimator 35, and of the limit PM amount trapped by the DPF 14 which amount has been previously retained in the memory of the ECU 31.

After that, in the step S27 in FIG. 5, the forcible executor 32 judges whether or not the special condition (i.e., X≦A and B≦X-Y≦C) that the runnable distance X is equal to or shorter than the predetermined distance (the predetermined value) A and the difference between the runnable distance X and the regeneration distance Y calculated by the running distance estimator 33 is equal to or shorter than the predetermined distance C and is equal to or longer than the predetermined B is met.

Here, if the special condition is fulfilled ("Yes" route), the forcible executor 32 forces the regeneration controller 22 to regenerate the DPF 14 even if the vehicle has not run the regeneration distance Y that the vehicle runs in order to regenerate the DPF 14 yet, the next regeneration period is assumed to advance and therefore regenerate the DPF 14 (step S28), and the succession of procedural steps proceeds to step S29.

Conversely, if the special condition is not met ("No" route in step S27), the advancing of regeneration in step S28 is not carried out and the succession of procedural steps proceeds to step S29.

After that, irrespective of the result of the judgment as to whether or not the above special condition is fulfilled, if the runnable distance X is equal to or shorter than a predetermined distance (a predetermined value) D (i.e., X ≦D), the operation of the regeneration controller 22 inhibited so that the regeneration controller 22 prohibits a main injection retard or a post injection, which causes the regeneration controller 22 to regenerate the DPF 14 ("Yes" route in step S29, and step S30). On the other hand, if the runnable distance X is in excess of the predetermined distance D, the succession of the procedural steps returns to the beginning.

As described above, in the exhaust gas purifying apparatus for an engine according to the embodiment of invention, if there is a small difference between the regeneration distance Y that the vehicle runs to achieve the regeneration period and the runnable distance X that the remaining fuel allows the vehicle to run, the regeneration period is assumed to be advanced even though the vehicle has not run to achieve the regeneration period and regeneration using fuel injection control by the regeneration controller 22 is forcibly executed because the vehicle may run out of gas while the DPF 14 is regenerated. It is therefore possible to avoid running out of gas during a regeneration process, and also prevent the DPF 14 from abnormal combustion caused from running out of gas during the regeneration process.

Execution of regeneration prevents purification capability of the DPF 14 from declining.

Further, since regeneration is advanced when the condition (special condition) that meets when the runnable distance X (a fuel parameter related to an amount of fuel remaining in the fuel tank) that the remaining fuel allows the vehicle to run is equal to or shorter than the predetermined distance A, excessive regenerations can be avoided and therefore fuel wasting can be avoided beforehand.

The regeneration inhibitor 23 of the reference embodiment inhibits regeneration when an amount of remaining fuel measured by the fuel tank sensor 17 is equal to or less than a predetermined amount. Alternatively, the amount of remaining fuel measured by the fuel tank sensor 17 may be substituted with a parameter related to an amount of fuel remaining in the fuel tank, such as a total amount of fuel that the injector injects after the vehicle filled up the fuel tank. Additionally, an amount of PM trapped may be estimated by a method other than that described in the embodiment of invention.

## Claims

1. An exhaust gas purification apparatus for purifying exhaust gas emitted from an engine supplied with fuel from a fuel tank, comprising:
a gas filter (14), disposed in an exhaust system connected to the engine, for trapping particulates included in exhaust gas emitted from the engine;
a regenerating means (22) for regenerating said gas filter (14) by controlling fuel injection in the engine when a regenerating condition is met so that the temperature, of the exhaust gas is increased;
a measuring means (17) for measuring a fuel parameter related to an amount of fuel remaining in the fuel tank; and
a managing means (23, 32, 34) for managing said regenerating means (22) to adjust the fuel injection based on the fuel parameter measured by said fuel measuring means (17), **characterized in that** said managing means (34) inhibits operation of said regenerating means (22) if a runnable distance (X), which the fuel parameter allows a vehicle to run, is equal to or smaller than a first threshold distance (D).

2. An exhaust gas purification apparatus set forth in claim 1, wherein:
the engine is mounted on a vehicle;
the regenerating condition is met when the vehicle runs a regeneration distance (Y); and
said managing means (32) forces said regenerating means (22) to operate even though the regenerating condition is unmet if a difference between the runnable distance (X) and the regeneration distance (Y) , which the fuel parameter allows the vehicle to run, is equal to or shorter than a second threshold distance (C).

3. An exhaust gas purification apparatus set forth in claim 1 or 2, wherein :
the engine is mounted on a vehicle;
the regenerating condition is met when the vehicle runs a regeneration distance (Y); and said managing means (32) forces said regenerating means (22) to operate even though the regenerating condition is unmet if a difference between the runnable distance (X) and the regeneration distance (Y) , which the fuel parameter allows the vehicle to run, is equal to or shorter than a second threshold distance (C) and is equal to or longer than a third threshold distance (B).

4. An exhaust gas purification apparatus set forth in claim 2 or 3, wherein
said managing means (32) forces said regenerating means (22) to operate if a difference between the runnable distance (X) and the regeneration distance (Y) is equal to or shorter than the second threshold distance (C) and the runnable distance (X) is equal to or smaller than a fourth threshold distance (A).

5. An exhaust gas purification apparatus set forth in any one of claims 1 to 4, wherein:
the engine is mounted on a vehicle;
the regenerating condition is met when the vehicle runs a regeneration distance (Y); and
said managing means (32, 34) inhibits operation of said regenerating means (22) if the runnable distance (X) is equal to or smaller than the first threshold distance (D) ; and
said managing means (32, 34) force said regenerating means (22) to operate even though the regenerating condition is unmet if a difference between the runnable distance (X) and the regeneration distance (Y) is equal to or shorter than a second threshold distance (C).

6. An exhaust gas purification apparatus set forth in any one of claims 1 to 5, wherein.
said managing means (32, 34) inhibits operation of said regenerating means (22) if the runnable distance (X) is equal to or shorter than a first threshold distance (D); and
said managing means (32, 34) forces said regenerating means (22) to operate if a difference between the runnable distance (X) and the regeneration distance (Y) is equal to or shorter than a second threshold distance (C) and the runnable distance (X) is equal to or shorter than a fourth threshold distance (A) which is longer than the first threshold distance (D) .

## Patentansprüche

1. Abgasreinigungsvorrichtung zum Reinigen von Abgas, das von einem mit Kraftstoff aus einem Kraftstofftank versorgten Motor emittiert wird, aufweisend:
ein Gasfilter (14), das in einem mit dem Motor verbundenen Abgassystem angeordnet ist, zum Einfangen von Partikeln, die in dem von dem Motor emittierten Abgas enthalten sind;
eine Regenerationseinrichtung (22) zum Regenerieren des Gasfilters (14) durch Steuern der Kraftstoffeinspritzung in den Motor, wenn eine Regenerierungsbedingung erfüllt ist, so dass die Temperatur des Abgases erhöht wird;
eine Messeinrichtung (17) zum Messen eines Kraftstoffparameters in Bezug auf eine Menge von in dem Kraftstofftank verbleibenden Kraftstoff; und
eine Verwaltungseinrichtung (23, 32, 34) zum Verwalten der Regenerationseinrichtung (22), um die Kraftstoffeinspritzung auf der Basis des von der Kraftstoffmesseinrichtung (17) gemessenen Kraftstoffparameters anzupassen,
**dadurch gekennzeichnet, dass**
die Verwaltungseinrichtung (34) einen Betrieb der Regenerationseinrichtung (22) verhindert, wenn eine mögliche Fahrstrecke (X), welche ein Kraftstoffparameter ein Fahrzeug fahren lässt, gleich oder kleiner als eine erste Schwellenwertstrecke (D) ist.

2. Abgasreinigungsvorrichtung nach Anspruch 1, wobei:
der Motor in einem Fahrzeug eingebaut ist;
die Regenerationsbedingung erfüllt ist, wenn das Fahrzeug eine Regenerationsstrecke (Y) fährt; und
die Verwaltungseinrichtung (32) die Regenerationseinrichtung (22) zum Arbeiten zwingt, obwohl die Regenerationsbedingung nicht erfüllt ist, wenn eine Differenz zwischen der möglichen Fahrstrecke (X) und der Regenerationsstrecke (Y), welche der Kraftstoffparameter das Fahrzeug fahren lässt, gleich oder kürzer als eine zweite Schwellenwertstrecke (C) ist.

3. Abgasreinigungsvorrichtung nach Anspruch 1 oder 2, wobei:
der Motor in einem Fahrzeug eingebaut ist;
die Regenerationsbedingung erfüllt ist, wenn das Fahrzeug eine Regenerationsstrecke (Y) fährt; und
die Verwaltungseinrichtung (32) die Regenerationseinrichtung (22) zum Arbeiten zwingt, obwohl die Regenerationsbedingung nicht erfüllt ist, wenn eine Differenz zwischen der möglichen Fahrstrecke (X) und der Regenerationsstrecke (Y), welche der Kraftstoffparameter das Fahrzeug fahren lässt, gleich oder kürzer als eine zweite Schwellenwertstrecke (C) und gleich oder länger als eine dritte Schwellenwertstrecke (B).

4. Abgasreinigungsvorrichtung nach Anspruch 2 oder 3, wobei:
wobei die Verwaltungseinrichtung (32) die Regenerationseinrichtung (22) zum Betrieb zwingt, wenn eine Differenz zwischen der möglichen Fahrstrecke (X) und der Regenerationsstrecke (Y) gleich oder kürzer als die zweite Schwellenwertstrecke (C) ist, und die mögliche Fahrstrecke (X) gleich oder kleiner als eine vierte Schwellenwertstrecke (A) ist.

5. Abgasreinigungsvorrichtung nach einem der Ansprüche 1 bis 4, wobei:
der Motor in einem Fahrzeug eingebaut ist;
die Regenerationsbedingung erfüllt ist, wenn das Fahrzeug eine Regenerationsstrecke (Y) fährt; und
die Verwaltungseinrichtung (32, 34) den Betrieb der Regenerationseinrichtung (22) verhindert, wenn die mögliche Fahrstrecke (X) gleich oder kleiner als die erste Schwellenwertstrecke (D); und
die Verwaltungseinrichtung (32, 34) die Regenerationseinrichtung (22) zum Betrieb zwingt, obwohl die Regenerationsbedingung nicht erfüllt ist, wenn eine Differenz zwischen der möglichen Fahrstrecke (X) und der Regenerationsstrecke (Y) gleich oder kürzer als die zweite Schwellenwertstrecke (C) ist.

6. Abgasreinigungsvorrichtung nach einem der Ansprüche 1 bis 5, wobei:
die Verwaltungseinrichtung (32, 34) den Betrieb der Regenerationseinrichtung (22) verhindert, wenn die mögliche Fahrstrecke (X) gleich oder kürzer als eine erste Schwellenwertstrecke (D); und
die Verwaltungseinrichtung (32, 34) die Regenerationseinrichtung (22) zum Betrieb zwingt, wenn eine Differenz zwischen der möglichen Fahrstrecke (X) und der Regenerationsstrecke (Y) gleich oder kürzer als eine zweite Schwellenwertstrecke (C) ist und die mögliche Fahrstrecke (X) gleich oder kürzer als ein vierte Schwellenwertstrecke (A) ist, welche länger als die erste Schwellenwertstrecke (D) ist.

## Revendications

1. Appareil de purification de gaz d'échappement pour purifier les gaz d'échappement émis par un moteur alimenté en carburant provenant d'un réservoir de carburant, comprenant :
un filtre à gaz (14), disposé dans un système d'échappement raccordé au moteur, pour piéger des particules comprises dans le gaz d'échappement émis par le moteur;
un moyen de régénération (22) pour régénérer ledit filtre à gaz (14) en régulant l'injection de carburant dans le moteur lorsqu'une condition de régénération est satisfaite de sorte que la température des gaz d'échappement est élevée ;
un moyen de mesure (17) pour mesurer un paramètre de carburant lié à une quantité de carburant restant dans le réservoir de carburant ; et
un moyen de gestion (23, 32, 34) pour gérer ledit moyen de régénération (22) afin d'ajuster l'injection de carburant sur la base du paramètre de carburant mesuré par ledit moyen de mesure de carburant (17),
**caractérisé en ce que**
ledit moyen de gestion (34) empêche le fonctionnement dudit moyen de régénération (22) si une distance pouvant être parcourue (X), que le paramètre de carburant permet à un véhicule de parcourir, est égale ou inférieure à une première distance seuil (D).

2. Appareil de purification des gaz d'échappement selon la revendication 1, dans lequel :
le moteur est monté sur un véhicule ;
la condition de régénération est satisfaite lorsque le véhicule parcourt une distance de régénération (Y) ; et
ledit moyen de gestion (32) oblige ledit moyen de régénération (22) à fonctionner même si la condition de régénération n'est pas satisfaite si une différence entre la distance pouvant être parcourue (X) et la distance de régénération (Y), que le paramètre de carburant permet au véhicule de parcourir, est égale ou inférieure à une deuxième distance seuil (C).

3. Appareil de purification des gaz d'échappement selon la revendication 1 ou 2, dans lequel :
le moteur est monté sur un véhicule ;
la condition de régénération est satisfaite lorsque le véhicule parcourt une distance de régénération (Y) ; et
ledit moyen de gestion (32) oblige ledit moyen de régénération (22) à fonctionner même lorsque la condition de régénération n'est pas satisfaite si une différence entre la distance pouvant être parcourue (X) et la distance de régénération (Y), que le paramètre de carburant permet au véhicule de parcourir, est égale ou inférieure à une deuxième distance seuil (C) et est égale ou supérieure à une troisième distance seuil (B).

4. Appareil de purification des gaz d'échappement selon la revendication 2 ou 3, dans lequel :
ledit moyen de gestion (32) oblige ledit moyen de régénération (22) à fonctionner si une différence entre la distance pouvant être parcourue (X) et la distance de régénération (Y) est égale ou inférieure à la deuxième distance seuil (C) et la distance pouvant être parcourue (X) est égale ou inférieure à une quatrième distance seuil (A).

5. Appareil de purification des gaz d'échappement selon l'une quelconque des revendications 1 à 4, dans lequel :
le moteur est monté sur un véhicule ;
la condition de régénération est satisfaite lorsque le véhicule parcourt une distance de régénération (Y) : et
ledit moyen de gestion (32, 34) empêche le fonctionnement dudit moyen de régénération (22) si la distance pouvant être parcourue (X) est égale ou inférieure à la première distance seuil (D) ; et
ledit moyen de gestion (32, 34) oblige ledit moyen de régénération (22) à fonctionner même lorsque la condition de régénération n'est pas satisfaite si une différence entre la distance pouvant être parcourue (X) et la distance de régénération (Y) est égale ou inférieure à une deuxième distance seuil (C).

6. Appareil de purification des gaz d'échappement selon l'une quelconque des revendications 1 à 5, dans lequel :
ledit moyen de gestion (32, 34) empêche le fonctionnement dudit moyen de régénération (22) si la distance pouvant être parcourue (X) est égale ou inférieure à une première distance seuil (D) ; et
ledit moyen de gestion (32, 34) oblige ledit moyen de régénération (22) à fonctionner si une différence entre la distance pouvant être parcourue (X) et la distance de régénération (Y) est égale ou inférieure à une deuxième distance seuil (C) et la distance pouvant être parcourue (X) est égale ou inférieure à une quatrième distance seuil (A) qui est supérieure à la première distance seuil (D).
